(19) Europäisches Patentamt
European Patent Office
Office européen des brevets

(11) **EP 1 864 157 B1**

(12) **FASCICULE DE BREVET EUROPEEN**

(45) Date de publication et mention
de la délivrance du brevet:
**27.07.2011 Bulletin 2011/30**

(21) Numéro de dépôt: **06726036.4**

(22) Date de dépôt: **07.03.2006**

(51) Int Cl.:
***G01S 17/88*** *(2006.01)*

(86) Numéro de dépôt international:
**PCT/FR2006/000504**

(87) Numéro de publication internationale:
**WO 2006/103325 (05.10.2006 Gazette 2006/40)**

(54) **PROCEDE ET DISPOSITIF DE MESURE DE LA TURBULENCE DE L'AIR DANS L' ENVIRONNEMENT D'UN AERONEF**

VERFAHREN UND EINRICHTUNG ZUR MESSUNG DER LUFTTURBULENZ IN DER UMGEBUNG EINES FLUGZEUGS

METHOD AND DEVICE FOR MEASURING AIR TURBULENCE IN THE SURROUNDINGS OF AN AIRCRAFT

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **31.03.2005 FR 0503128**

(43) Date de publication de la demande:
**12.12.2007 Bulletin 2007/50**

(73) Titulaire: **AIRBUS OPERATIONS (SAS)**
**31060 Toulouse (FR)**

(72) Inventeurs:
• **BOMMIER, François**
  **F-31820 Pibrac (FR)**
• **REYMOND, Maël**
  **F-31840 Aussonne (FR)**

(74) Mandataire: **Hauer, Bernard**
  **Bloch & Bonnétat**
  **23bis, rue de Turin**
  **75008 Paris (FR)**

(56) Documents cités:
**US-A- 5 648 604      US-A1- 2003 009 268
US-B1- 6 297 878**

**Description**

L'invention concerne un procédé et un dispositif de mesure de la turbulence de l'air dans l'environnement d'un aéronef, en particulier d'un avion de transport.

Plus particulièrement, bien que non exclusivement, la turbulence mesurée peut être utilisée pour valider des modèles de simulation qui seront utilisés pour tester des caractéristiques d'un avion en laboratoire, lors de la conception ou avant le vol dudit aéronef, et notamment pour choisir le modèle le plus performant parmi une pluralité de modèles théoriques possibles.

Pour une telle application, il est bien entendu nécessaire que les mesures réalisées soient particulièrement précises et fiables.

On sait qu'en plus de l'hétérogénéité naturelle du champ de vitesses aérodynamiques (ou champ de turbulence) dans l'environnement extérieur de l'aéronef, il existe également une perturbation de ce champ à proximité de l'aéronef, souvent sur plusieurs dizaines de mètres, qui est engendrée par le passage dudit aéronef. Cette perturbation perdure dans le sillage engendré par le passage de l'aéronef. Ceci rend bien entendu difficile la réalisation de mesures précises.

Par ailleurs, on connaît :

- par le document US-5 648 604, un système pour déterminer des paramètres anémobaroclinométriques à bord d'un aéronef. Ce système utilise deux anémomètres laser, chaque anémomètre laser comportant une tête adaptée pour effectuer des mesures selon quatre axes de mesure. Le système calcule, à partir de huit projections du vecteur vitesse, et de la pression statique, des paramètres anémobaroclinométriques, comme le nombre de Mach et l'altitude barométrique, à l'aide d'un modèle. Ce système a pour but de supprimer une sonde externe pour des raisons aérodynamiques ;
- par le document US-6 297 878, un système de détermination de données air. Ce système utilise trois sources laser pour mesurer la turbulence de l'air dans l'environnement d'un aéronef, et notamment pour calculer un champ de vitesses aérodynamiques ; et
- par le document US-2003/009268, un système de prédiction de turbulence. Ce système est capable de mesurer le vecteur vitesse du vent en trois dimensions, par effet Doppler suivant plusieurs axes, par balayage conique.

La présente invention concerne un procédé de mesure, particulièrement efficace et fiable, pour mesurer la turbulence de l'air dans l'environnement d'un aéronef, en particulier d'un avion de transport, procédé qui permet de remédier aux inconvénients précités.

Selon l'invention, ledit procédé est remarquable en ce que :

a) lors d'un vol de l'aéronef, on réalise, à l'aide de lidars qui sont montés sur l'aéronef, douze mesures de vitesse aérodynamique dans l'environnement extérieur dudit aéronef, lesdites mesures étant réalisées en quatre points de mesure différents à chaque fois selon lesdits trois axes prédéterminés, un lidar mesurant à chaque point de mesure trois composantes d'une vitesse aérodynamique respectivement selon lesdits trois axes prédéterminés, en réalisant pour chaque composante une mesure de l'effet Doppler d'un faisceau laser émis et rétrodiffusé par des particules présentes dans un volume prédéterminé autour dudit point de mesure ; et

b) on détermine un champ de vitesses aérodynamiques qui existe dans ledit environnement de l'aéronef et qui est représentatif de ladite turbulence de l'air, à l'aide desdites douze mesures et d'un modèle mathématique prédéterminé du premier ordre décrivant un champ de vitesses aérodynamiques en fonction de douze variables, lesdites douze variables étant les trois composantes du vent respectivement selon lesdits trois axes prédéterminés et les trois dérivées premières du vent respectivement selon chacun desdits trois axes prédéterminés, et ledit modèle mathématique prenant en compte l'hypothèse selon laquelle le champ de vitesses aérodynamiques n'est pas uniforme aux différents points de mesure et l'hypothèse selon laquelle les dérivées premières dudit champ de vitesses aérodynamiques sont uniformes.

Ainsi, grâce à l'invention, on obtient une mesure de la turbulence qui est particulièrement précise et fiable. En effet :

- d'une part, en raison de l'utilisation de lidars, les différents points de mesure sont éloignés de l'aéronef, comme précisé ci-dessous, ce qui permet de réaliser des mesures dans des zones non perturbées par le passage de l'aéronef, et donc de mesurer la turbulence effective ; et
- d'autre part, ledit modèle mathématique (du premier ordre décrivant un champ de vitesses aérodynamiques en fonction de douze variables) qui est utilisé pour déterminer la turbulence prend en compte l'hypothèse selon laquelle le champ de vitesses aérodynamiques n'est pas uniforme aux différents points de mesure, ce qui correspond à la réalité. Ce modèle tient compte en revanche de l'hypothèse selon laquelle les dérivées premières du champ de vitesses aérodynamiques sont uniformes, ce qui suppose l'utilisation de douze variables (trois composantes et neuf dérivées premières).

On sait qu'une turbulence de l'air est due à un champ de vitesses aérodynamiques non uniforme et représente donc une agitation désordonnée de l'air soumis à un écoulement dans lequel les filets fluides se mélangent au lieu de conserver leur individualité.

Par ailleurs, on sait qu'un lidar est un dispositif permettant de déterminer la position et la distance d'un obstacle par réflexion sur celui-ci d'un rayonnement lumineux optique, émis généralement par un laser. Le terme lidar provient de l'abréviation d'une expression anglaise "Light Detection And Ranging". Le principe du lidar repose sur une transposition dans le domaine lumineux ou optique du principe d'un radar appliqué dans le domaine radioélectrique.

A l'étape a), dans un premier mode de réalisation, on utilise quatre lidars, dont chacun réalise des mesures à l'un desdits quatre points de mesure, tandis que dans un second mode de réalisation préféré, on utilise trois lidars, deux desdits lidars réalisant chacun des mesures à l'un desdits points de mesure, et le troisième lidar réalisant des mesures à deux instants successifs lors du vol de l'aéronef de manière à pouvoir réaliser ainsi des mesures à deux points de mesure différents qui correspondent aux deux points de mesure restants.

Dans le cadre de la présente invention, lesdits lidars peuvent être agencés à n'importe quel endroit sur l'aéronef où ils sont en situation de pouvoir réaliser les mesures précitées (à condition que les endroits choisis soient différents les uns des autres). Toutefois, dans un mode de réalisation particulier appliqué au second mode de réalisation préféré précédent, lesdits lidars sont agencés respectivement sur un premier hublot avant droite, un premier hublot avant gauche et une aile de l'aéronef.

En outre, de façon avantageuse, lesdits axes prédéterminés dépendent de l'aéronef et sont orientés vers l'avant. Le référentiel utilisé est donc lié à l'aéronef.

La présente invention concerne également un dispositif de mesure de la turbulence de l'air dans l'environnement d'un aéronef.

Selon l'invention, ledit dispositif est remarquable en ce qu'il comporte :

- un système de mesure comprenant des lidars qui sont montés sur l'aéronef et qui sont destinés à réaliser lors d'un vol de l'aéronef douze mesures de vitesse aérodynamique dans l'environnement extérieur dudit aéronef, ledit système de mesure réalisant lesdites douze mesures en quatre points de mesure différents à chaque fois selon trois axes prédéterminés, un lidar mesurant à chaque point de mesure trois composantes d'une vitesse aérodynamique respectivement selon lesdits trois axes prédéterminés, en réalisant pour chaque composante une mesure de l'effet Doppler d'un faisceau laser émis et rétrodiffusé par des particules présentes dans un volume prédéterminé autour dudit point de mesure ; et
- une unité centrale qui, à l'aide des mesures réalisées par ledit système de mesure et d'un modèle mathématique prédéterminé du premier ordre décrivant un champ de vitesses aérodynamiques en fonction de douze variables, détermine un champ de vitesses aérodynamiques qui existe dans ledit environnement de l'aéronef, et qui est représentatif de ladite turbulence de l'air, lesdites douze variables étant les trois composantes du vent respectivement selon lesdits trois axes prédéterminés et les trois dérivées premières du vent respectivement selon chacun desdits trois axes prédéterminés, et ledit modèle mathématique prenant en compte l'hypothèse selon laquelle le champ de vitesses aérodynamiques n'est pas uniforme aux différents points de mesure et l'hypothèse selon laquelle les dérivées premières dudit champ de vitesses aérodynamiques sont uniformes.

Dans un premier mode de réalisation, ladite unité centrale est montée sur l'aéronef et détermine la turbulence de l'air lors du vol de l'aéronef.

Dans un second mode de réalisation préféré, le dispositif conforme à l'invention comporte, de plus, un moyen d'enregistrement pour enregistrer dans une base de données les mesures réalisées par ledit système de mesure, et ladite unité centrale détermine la turbulence de l'air au sol après un vol, à l'aide des mesures enregistrées dans ladite base de données lors du vol.

En outre, avantageusement, ledit système de mesure comporte :

- soit quatre lidars, dont chacun réalise des mesures à l'un desdits quatre points de mesure ;
- soit trois lidars. Dans ce cas, deux desdits lidars réalisent chacun des mesures à l'un desdits points de mesure, et le troisième lidar réalise des mesures à deux instants successifs lors du vol de l'aéronef de manière à pouvoir réaliser ainsi des mesures à deux points de mesure différents qui correspondent aux deux points de mesure restants. Dans cet exemple, avantageusement, lesdits lidars sont agencés respectivement sur un premier hublot avant droite, un premier hublot avant gauche et une aile de l'aéronef.

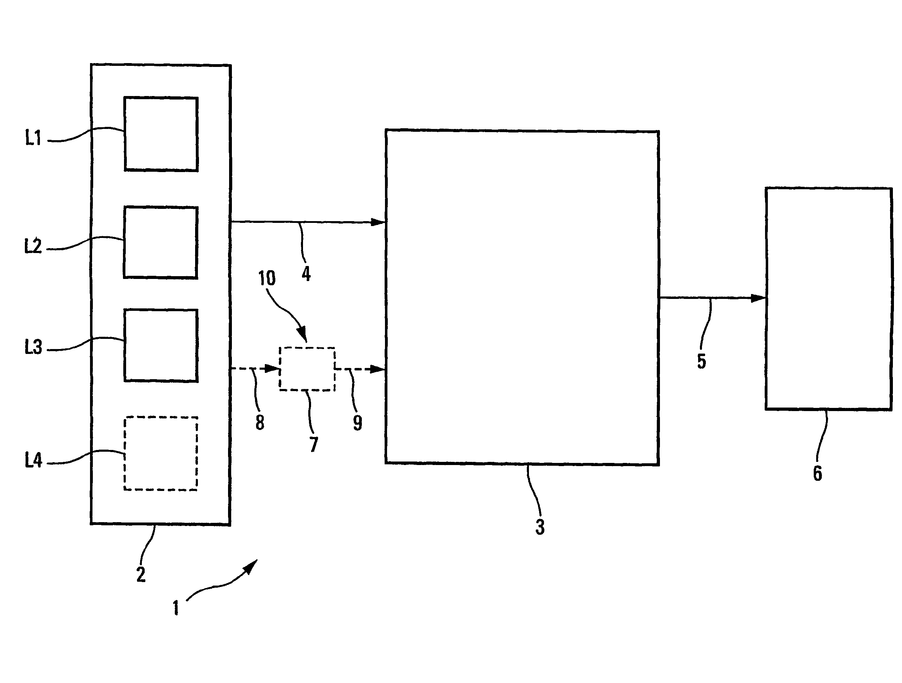

L'unique figure du dessin annexé fera bien comprendre comment l'invention peut être réalisée. Cette figure est un schéma synoptique d'un dispositif de mesure conforme à l'invention.

Le dispositif 1 conforme à l'invention et représenté schématiquement sur la figure est destiné à mesurer la turbulence de l'air dans l'environnement d'un aéronef non représenté, en particulier d'un avion de transport. On sait que la turbulence de l'air correspond à une agitation se superposant au mouvement moyen de l'air et constituée par des mouvement désordonnés, en continuelle transformation. La turbulence se rencontre à l'intérieur ou au voisinage des nuages (par exemple dans un nuage orageux où coexistent des courants verticaux de sens contraires). Il existe également de la turbulence en ciel clair, soit près du sol, soit surtout à très haute altitude à proximité de courants jets.

Selon l'invention, ledit dispositif de mesure 1 comporte :

- un système de mesure 2 qui comprend une pluralité de lidars L1, L2, L3, L4. Ces lidars L1, L2, L3, L4 précisés ci-dessous sont montés sur l'aéronef et sont destinés à réaliser, lors d'un vol dudit aéronef, douze mesures M1 à M12 de vitesse aérodynamique précisées ci-après. Ces mesures M1 à M12 sont réalisées à l'extérieur dudit aéronef dans l'environnement proche de ce dernier, mais toutefois à au moins une distance prédéterminée dudit aéronef, en particulier à au moins 30 mètres. Ledit système de mesure 2 réalise lesdites douze mesures en quatre points de mesure différents, avec à chaque fois trois mesures par point de mesure, respectivement selon trois axes X, Y, Z prédéterminés ; et

- une unité centrale 3 qui, à l'aide des mesures réalisées par ledit système de mesure 2 et d'un modèle mathématique intégré, détermine un champ de vitesses aérodynamiques existant dans ledit environnement de l'aéronef, qui est représentatif de ladite turbulence de l'air. Ce modèle mathématique est un modèle du premier ordre qui décrit un champ de vitesses aérodynamiques en fonction de douze variables.

Ainsi, grâce à l'invention, on obtient une mesure de la turbulence qui est particulièrement précise et fiable. En effet :

- d'une part, en raison de l'utilisation de lidars L1, L2, L3, L4, les différents points de mesure sont éloignés de l'aéronef, ce qui permet :

■ de réaliser des mesures dans des zones non perturbées par le passage de l'aéronef ; et donc
■ de mesurer la turbulence atmosphérique effective sur la trajectoire de l'aéronef, mais en dehors de la perturbation généré par ce dernier ; et

- d'autre part, ledit modèle mathématique (du premier ordre décrivant un champ de vitesses aérodynamiques en fonction de douze variables) qui est utilisé pour déterminer la turbulence prend en compte l'hypothèse selon laquelle le champ de vitesses aérodynamiques n'est pas uniforme aux différents points de mesure, ce qui correspond à la réalité. Ce modèle tient compte, en revanche, de l'hypothèse selon laquelle les dérivées premières dudit champ de vitesses aérodynamiques sont uniformes, ce qui suppose l'utilisation de douze variables (trois composantes et neuf dérivées premières précisées ci-dessous).

On sait qu'un lidar L1, L2, L3, L4 est un dispositif permettant de déterminer la position et la distance d'un obstacle par réflexion sur celui-ci d'un rayonnement lumineux optique, émis généralement par un laser. Le terme lidar provient de l'abréviation d'une expression anglaise "Light Détection And Ranging". Le principe du lidar repose sur une transposition dans le domaine lumineux ou optique du principe d'un radar appliqué dans le domaine radioélectrique.

Chaque lidar L1, L2, L3, L4 mesure au point de mesure correspondant trois composantes d'une vitesse aérodynamique respectivement selon lesdits trois axes X, Y et Z prédéterminés, en réalisant pour chaque composante une mesure de l'effet Doppler d'un faisceau laser émis et rétrodiffusé par les particules qui sont naturellement présentes dans un volume prédéterminé autour dudit point de mesure.

Dans un premier mode de réalisation, le dispositif 1 conforme à l'invention comporte quatre lidars L1, L2, L3 et L4. Chacun de ces quatre lidars L1 à L4 réalise trois mesures à l'un desdits quatre points de mesure.

En outre, dans un second mode de réalisation préféré, ledit dispositif 1 comporte uniquement trois lidars L1, L2 et L3. Un premier lidar L1 réalise trois mesures à un premier desdits points de mesure, un deuxième lidar L2 réalise trois mesures à un deuxième desdits points de mesure, et le troisième lidar L3 réalise trois mesures à chaque fois à une même position par rapport à l'aéronef, mais à deux instants successifs lors du vol de l'aéronef de manière à pouvoir réaliser ainsi des mesures à deux points de mesure différents (espacés l'un de l'autre d'une distance représentative du vol de l'aéronef entre lesdits deux instants).

Dans le cadre de la présente invention, lesdits lidars L1, L2, L3, L4 peuvent être agencés à n'importe quel endroit (sur l'aéronef) où ils peuvent réaliser les mesures précitées (à condition que les endroits choisis soient différents les uns des autres). Toutefois, dans un mode de réalisation particulier appliqué à un avion et au second mode de réalisation préféré précédent, lesdits lidars L1, L2 et L3 sont agencés respectivement sur un premier hublot avant droite, un premier hublot avant gauche et une aile de l'avion.

Lesdits axes X, Y et Z précités dépendent de l'aéronef et correspondent, par exemple dans le cas d'un avion, respectivement à l'axe longitudinal de l'avion, un axe moyen passant par les ailes et qui est orthogonal audit axe longitudinal, et un axe qui est perpendiculaire au plan formé par les deux axes précédents.

Longitudinalement, les points de mesure doivent être suffisamment éloignés de l'aéronef, par exemple de 30 mètres, pour ne pas être soumises aux perturbations générées par l'aéronef. En outre, latéralement, deux points de mesure doivent être suffisamment éloignés l'un de l'autre pour pouvoir réaliser des mesures différentes, mais pas trop pour continuer à satisfaire des approximations linéaires prises en compte dans le modèle théorique. De préférence, la distance latérale entre deux points de mesure ne doit pas dépasser l'envergure de l'aéronef.

Comme indiqué précédemment, l'unité centrale 3 détermine la turbulence de l'air (sous forme d'un champ de vitesses aérodynamiques) à l'aide d'un modèle mathématique du premier ordre qui décrit un champ de vitesses aérodynamiques en fonction de douze variables.

Les douze variables prises en compte dans ce modèle mathématique représentent :

- les trois composantes Wx, Wy, Wz du vent W, respectivement selon lesdits axes X, Y et Z ;
- les trois dérivées premières du vent W selon l'axe X :

$$\partial Wx/\partial x,\ \partial Wy/\partial x,\ \partial Wz/\partial x\ ;$$

- les trois dérivées premières du vent W selon l'axe Y :

$$\partial Wx/\partial y,\ \partial Wy/\partial y,\ \partial Wz/\partial y\ ;\ et$$

- les trois dérivées premières du vent W selon l'axe Z :

$$\partial Wx/\partial z,\ \partial Wy/\partial z,\ \partial Wz/\partial z.$$

Plus précisément, ladite unité centrale 3 détermine ledit champ de vitesses aérodynamiques, à partir dudit modèle mathématique et desdites mesures, en tenant compte des considérations suivantes.

A partir des composantes précitées du vent et des gradients, on peut calculer les trois composantes du vent en un point quelconque de l'espace. Pour un point P fixe dans un repère lié à l'aéronef, les trois composantes du vent correspondent donc à une combinaison linéaire des composantes du vent et des gradients. Si le point P est un point auquel un lidar L1, L2, L3, L4 fait une mesure, alors cette mesure est la projection sur la direction de mesure des trois composantes du vent. Cette opération de projection est elle aussi linéaire. Pour chaque point de mesure P, on a donc une relation linéaire entre les composantes du vent et des gradients d'une part, et les mesures de chaque lidar d'autre part. On peut écrire cette relation sous forme d'une matrice. Avec M le vecteur des douze mesures des lidars L1, L2, L3 et L4, V le vecteur des composantes du vent et des gradients, et N est une matrice qui les relie, on obtient la relation suivante :

$$M = N.V$$

dans laquelle :

$$M = \begin{bmatrix} M1 \\ M2 \\ M3 \\ M4 \\ M5 \\ M6 \\ M7 \\ M8 \\ M9 \\ M10 \\ M11 \\ M12 \end{bmatrix}$$

$$V = \begin{bmatrix} Wx \\ \dfrac{\partial Wx}{\partial x} \\ \dfrac{\partial Wx}{\partial y} \\ \dfrac{\partial Wx}{\partial z} \\ Wy \\ \dfrac{\partial Wy}{\partial x} \\ \dfrac{\partial Wy}{\partial y} \\ \dfrac{\partial Wy}{\partial z} \\ Wz \\ \dfrac{\partial Wz}{\partial x} \\ \dfrac{\partial Wz}{\partial y} \\ \dfrac{\partial Wz}{\partial z} \end{bmatrix}$$

La matrice N dépend des directions des mesures, des positions des lidars L1, L2, L3, L4 sur l'aéronef, et des distances de mesure desdits lidars L1, L2, L3, L4. On peut donc calculer les composantes du vent estimé V, à l'aide de l'expression suivante :

$$\hat{V}=N^{-1}.M$$

où $N^{-1}$ est la matrice inverse de N.

On notera que selon l'invention, le système de mesure 2 émet autant de faisceaux de mesure que nécessaire dans des directions optimisées, et l'unité centrale 3 réalise des traitements desdites mesures, qui permettent de s'affranchir de l'impact de contraintes technologiques et d'installation, notamment en ce qui concerne la position des points de mesure et du fait que la vitesse mesurée est la projection de la vitesse aérodynamique sur un axe de visée (ou axe d'émission du faisceau de mesure).

Les résultats des traitements réalisés par ladite unité centrale 3 peuvent être transmis par l'intermédiaire d'une liaison 5 à un moyen d'information usuel 6, par exemple un écran de visualisation ou une imprimante, qui est susceptible de fournir lesdits résultats à un opérateur.

Dans un premier mode de réalisation, ladite unité centrale 3 est montée sur l'aéronef et est reliée par une liaison 4 audit système de mesure 2. Elle détermine alors la turbulence de l'air directement lors du vol de l'aéronef, à l'aide des mesures réalisées au cours de ce vol.

En revanche, dans un second mode de réalisation, qui est représenté partiellement en traits interrompus sur la figure, le dispositif de mesure 1 comporte de plus un moyen d'enregistrement 10 qui est relié par une liaison 8 audit système de mesure 2 et qui enregistre, en vol, dans une base de données 7 qu'il comporte, les mesures qui sont réalisées par ledit système de mesure 2. Ces résultats peuvent être transmis au sol par l'intermédiaire d'une liaison 9 (une liaison de transmission de données amovible) à l'unité centrale 3. Ladite unité centrale 3 détermine, dans ce cas, la turbulence de l'air au sol après le vol, à l'aide des mesures enregistrées dans ladite base de données 7 lors du vol et transmises par l'intermédiaire de ladite liaison 9.

Par ailleurs, comme indiqué précédemment, chaque lidar L1, L2, L3 et L4 effectue trois mesures. Ces mesures sont faites dans des directions qui ne sont pas forcément parallèles aux axes X, Y et Z de l'aéronef. Ces directions ne sont pas nécessairement perpendiculaires. Elles sont optimisées de façon à améliorer la qualité des mesures. Elles doivent être bien différentiées de façon à ce que l'inversion numérique de la matrice N permette de conserver une bonne précision. Elles satisfont aussi d'autres prérogatives : elles sont orientées vers des zones de l'espace où le champ aérodynamique est le moins perturbé possible par le passage de l'aéronef. En particulier, les points les plus favorables sont tous situés vers l'avant de l'aéronef, et beaucoup sont orientés vers le haut (et l'avant).

**Revendications**

1. Procédé de mesure de la turbulence de l'air dans l'environnement d'un aéronef,
   **caractérisé en ce que** :

   a) lors d'un vol de l'aéronef, on réalise, à l'aide de lidars (L1, L2, L3, L4) qui sont montés sur l'aéronef, douze mesures de vitesse aérodynamique dans l'environnement extérieur dudit aéronef, lesdites mesures étant réalisées en quatre points de mesure différents à chaque fois selon lesdits trois axes prédéterminés, un lidar (L1, L2, L3, L4) mesurant à chaque point de mesure trois composantes d'une vitesse aérodynamique respectivement selon lesdits trois axes prédéterminés, en réalisant pour chaque composante une mesure de l'effet Doppler d'un faisceau laser émis et rétrodiffusé par des particules présentes dans un volume prédéterminé autour dudit point de mesure ; et
   b) on détermine un champ de vitesses aérodynamiques qui existe dans ledit environnement de l'aéronef et qui est représentatif de ladite turbulence de l'air, à l'aide desdites douze mesures et d'un modèle mathématique prédéterminé du premier ordre décrivant un champ de vitesses aérodynamiques en fonction de douze variables, lesdites douze variables étant les trois composantes du vent respectivement selon lesdits trois axes prédéterminés et les trois dérivées premières du vent respectivement selon chacun desdits trois axes prédéterminés, et ledit modèle mathématique prenant en compte l'hypothèse selon laquelle le champ de vitesses aérodynamiques n'est pas uniforme aux différents points de mesure et l'hypothèse selon laquelle les dérivées premières dudit champ de vitesses aérodynamiques sont uniformes.

2. Procédé selon la revendication 1,
   **caractérisé en ce qu'**à l'étape a), on utilise quatre lidars (L1, L2, L3, L4), dont chacun réalise des mesures à l'un desdits quatre points de mesure.

3. Procédé selon la revendication 1,
   **caractérisé en ce qu'**à l'étape a), on utilise trois lidars (L1, L2, L3), **en ce que** deux desdits lidars réalisent chacun des mesures à l'un desdits points de mesure, et **en ce que** le troisième lidar réalise des mesures à deux instants successifs lors du vol de l'aéronef de manière à pouvoir réaliser ainsi des mesures à deux points de mesure différents qui correspondent aux deux points de mesure restants.

4. Procédé selon la revendication 3,
   **caractérisé en ce que** lesdits lidars (L1, L2, L3) sont agencés respectivement sur un premier hublot avant droite, un premier hublot avant gauche et une aile de l'aéronef.

5. Procédé selon l'une quelconque des revendications 1 à 4,
   **caractérisé en ce que** lesdits axes prédéterminés dépendent de l'aéronef.

6. Dispositif de mesure de la turbulence de l'air dans l'environnement d'un aéronef,
   **caractérisé en ce qu'**il comporte :

   - un système de mesure (2) comprenant des lidars (L1, L2, L3, L4) qui sont montés sur l'aéronef et qui sont destinés à réaliser lors d'un vol de l'aéronef douze mesures de vitesse aérodynamique dans l'environnement extérieur dudit aéronef, ledit système de mesure (2) réalisant lesdites douze mesures en quatre points de mesure différents à chaque fois selon trois axes prédéterminés, un lidar (L1, L2, L3, L4) mesurant à chaque point de mesure trois composantes d'une vitesse aérodynamique respectivement selon lesdits trois axes prédéterminés, en réalisant pour chaque composante une mesure de l'effet Doppler d'un faisceau laser émis et rétrodiffusé par des particules présentes dans un volume prédéterminé autour dudit point de mesure ; et
   - une unité centrale (3) qui, à l'aide des mesures réalisées par ledit système de mesure (2) et d'un modèle mathématique prédéterminé du premier ordre décrivant un champ de vitesses aérodynamiques en fonction de douze variables, détermine un champ de vitesses aérodynamiques qui existe dans ledit environnement de l'aéronef, et qui est représentatif de ladite turbulence de l'air, lesdites douze variables étant les trois composantes du vent respectivement selon lesdits trois axes prédéterminés et les trois dérivées premières du vent respectivement selon chacun desdits trois axes prédéterminés, et ledit modèle mathématique prenant en compte l'hypothèse selon laquelle le champ de vitesses aérodynamiques n'est pas uniforme aux différents points de mesure et l'hypothèse selon laquelle les dérivées premières dudit champ de vitesses aérodynamiques sont uniformes.

7. Dispositif selon la revendication 6,
   **caractérisé en ce que** ladite unité centrale (3) est montée sur l'aéronef et détermine la turbulence de l'air lors du vol de l'aéronef.

8. Dispositif selon la revendication 6,
   **caractérisé en ce qu'**il comporte, de plus, un moyen d'enregistrement (10) pour enregistrer dans une base de données (7) les mesures réalisées par ledit système de mesure (2), et **en ce que** ladite unité centrale (3) détermine la turbulence de l'air au sol après un vol, à l'aide des mesures enregistrées dans ladite base de données (7) lors du vol.

9. Dispositif selon l'une des revendications 6 à 8,
   **caractérisé en ce que** ledit système de mesure (2) comporte quatre lidars (L1, L2, L3, L4), dont chacun réalise des mesures à l'un desdits quatre points de mesure.

10. Dispositif selon l'une des revendications 6 à 8,
    **caractérisé en ce que** ledit système de mesure (2) comporte trois lidars (L1, L2, L3), **en ce que** deux desdits lidars réalisent chacun des mesures à l'un desdits points de mesure, et **en ce que** le troisième lidar réalise des mesures à deux instants successifs lors du vol de l'aéronef de manière à pouvoir réaliser ainsi des mesures à deux points de mesure différents qui correspondent aux deux points de mesure restants.

11. Dispositif selon la revendication 10,
    **caractérisé en ce que** lesdits lidars (L1, L2, L3) sont agencés respectivement sur un premier hublot avant droite, un premier hublot avant gauche et une aile de l'aéronef.

12. Aéronef,
    **caractérisé en ce qu'**il comporte un dispositif (1) tel que celui spécifié sous l'une quelconque des revendications 6 à 11.

**Claims**

1. A method of measuring air turbulence in the surroundings of an aircraft,
   **characterized in that**:

   a) during a flight of the aircraft, twelve measurements of aerodynamic velocity in the environment surrounding said aircraft are carried out, with the aid of lidars (L1, L2, L3, L4) which are mounted on the aircraft, said measurements being carried out at four different measurement points, each time according to three predetermined axes, a lidar (L1, L2, L3, L4) measuring at each measurement point three components of an aerodynamic velocity respectively according to said three predetermined axes, by carrying out for each component a measurement of the Doppler effect of a laser beam emitted and backscattered by particles present in a predetermined volume around said measurement point; and
   b) an aerodynamic velocity field which exists in said environment of the aircraft and which is representative of said turbulence of the air is determined, with the aid of said twelve measurements and of a first-order predetermined mathematical model describing an aerodynamic velocity field as a function of twelve variables, said twelve variables being the three components of the wind respectively along said three predetermined cases and the three first derivates of the wind respectively along each of said three predetermined axes, said mathematical model taking into account the hypothesis according to which the aerodynamic velocity field is not uniform at the various measurement points, and the hypothesis according to which the first derivatives of said aerodynamic velocity field are uniform.

2. The method as claimed in claim 1,
**characterized in that** in step a), four lidars (L1, L2, L3, L4) are used, each of which carries out measurements at one of said four measurement points.

3. The method as claimed in claim 1,
**characterized in that** in step a), three lidars (L1, L2, L3) are used, **in that** two of said lidars carry out each of the measurements at one of said measurement points, and **in that** the third lidar carries out measurements at two successive instants during the flight of the aircraft so as to be able thus to carry out measurements at two different measurement points which correspond to the two remaining measurement points.

4. The method as claimed in claim 3,
**characterized in that** said lidars (L1, L2, L3) are respectively arranged on a first front right porthole, a first front left porthole and a wing of the aircraft.

5. The method as claimed in any one of claims 1 to 4,
**characterized in that** said predetermined axes depend on the aircraft.

6. A device for measuring air turbulence in the surroundings of an aircraft,
**characterized in that** it comprises:

- a measurement system (2) comprising lidars (L1, L2, L3, L4) which are mounted on the aircraft and which are intended to carry out during a flight of the aircraft twelve measurements of aerodynamic velocity in the environment surrounding said aircraft, said measurement system (2) carrying out said twelve measurements at four different measurement points, each time according to three predetermined axes, a lidar (L1, L2, L3, L4) measuring at each measurement point three components of an aerodynamic velocity respectively according to said three predetermined axes, by carrying out for each component a measurement of the Doppler effect of a laser beam emitted and backscattered by particles present in a predetermined volume around said measurement point; and
- a central unit (3) which, with the aid of the measurements carried out by said measurement system (2) and of a first-order predetermined mathematical model describing an aerodynamic velocity field as a function of twelve variables, determines an aerodynamic velocity field which exists in said environment of the aircraft, and which is representative of said turbulence of the air, said twelve variables being the three components of the wind respectively along said three predetermined cases and the three first derivates of the wind respectively along each of said three predetermined axes, said mathematical model taking into account the hypothesis according to which the aerodynamic velocity field is not uniform at the various measurement points, and the hypothesis according to which the first derivatives of said aerodynamic velocity field are uniform.

7. The device as claimed in claim 6,
**characterized in that** said central unit (3) is mounted on the aircraft and determines the turbulence of the air during the flight of the aircraft.

8. The device as claimed in claim 6,
**characterized in that** it comprises, moreover, a recording means (10) for recording in a database (7) the measurements carried out by said measurement system (2), and **in that** said central unit (3) determines the turbulence of the air on the ground after a flight, with the aid of the measurements recorded in said database (7) during the flight.

9. The device as claimed in one of claims 6 to 8,
**characterized in that** said measurement system (2) comprises four lidars (L1, L2, L3, L4), each of which carries out measurements at one of said four measurement points.

10. The device as claimed in one of claims 6 to 8,
**characterized in that** said measurement system (2) comprises three lidars (L1, L2, L3), **in that** two of said lidars carry out each of the measurements at one of said measurement points, and **in that** the third lidar carries out measurements at two successive instants during the flight of the aircraft so as to be able thus to carry out measurements at two different measurement points which correspond to the two remaining measurement points.

11. The device as claimed in claim 10,
**characterized in that** said lidars (L1, L2, L3) are respectively arranged on a first front right porthole, a first front left porthole and a wing of the aircraft.

12. An aircraft,
**characterized in that** it comprises a device (1) such as that specified under any one of claims 6 to 11.

**Patentansprüche**

1. Verfahren zum Messen der Luftturbulenz in der Umgebung eines Luftfahrzeugs, **dadurch gekennzeichnet, dass**:

   a) bei einem Flug des Luftfahrzeugs anhand von LIDAR-Geräten (L1, L2, L3, L4), die auf dem Luftfahrzeug montiert sind, zwölf Messungen der Luftleitgeschwindigkeit in der Außenumgebung des Luftfahrzeugs ausgeführt werden, wobei die Messungen jedes Mal an vier verschiedenen Messpunkten auf den drei vorherbestimmten Achsen ausgeführt werden, wobei ein LIDAR-Gerät (L1, L2, L3, L4) an jedem Messpunkt drei Komponenten einer Luftleitgeschwindigkeit jeweils auf den drei vorherbestimmten Achsen misst, indem es für jede Komponente eine Messung des Doppler-Effekts eines Laserstrahls ausführt, der emittiert wird und von Teilchen zurückgestreut wird, die in einem vorherbestimmten Volumen um den Messpunkt herum vorliegen; und
   b) ein Feld von Luftleitgeschwindigkeiten, das in der Umgebung des Luftfahrzeugs vorliegt und für die Luftturbulenz repräsentativ ist, anhand der zwölf Messungen und eines vorherbestimmten mathematischen Modells erster Ordnung, das ein Feld von Luftleitgeschwindigkeiten als Funktion von zwölf Variablen beschreibt, bestimmt wird, wobei die zwölf Variablen die drei Komponenten des Windes jeweils auf den drei vorherbestimmten Achsen und die drei ersten Ableitungen des Windes jeweils auf jeder der drei vorherbestimmten Achsen sind, und wobei das mathematische Modell die Hypothese, nach der das Feld von Luftleitgeschwindigkeiten an den verschiedenen Messpunkten nicht einheitlich ist, und die Hypothese, nach der die ersten Ableitungen des Feldes von Luftleitgeschwindigkeiten nicht einheitlich sind, berücksichtigt.

2. Verfahren nach Anspruch 1, **dadurch gekennzeichnet, dass** in Schritt a) vier LIDAR-Geräte (L1, L2, L3, L4) verwendet werden, von denen jedes Messungen an einem der vier Messpunkte ausführt.

3. Verfahren nach Anspruch 1, **dadurch gekennzeichnet, dass** in Schritt a) drei LIDAR-Geräte (L1, L2, L3) verwendet werden, indem zwei der LIDAR-Geräte jeweils Messungen an einem der Messpunkte ausführen, und dass das dritte LIDAR-Gerät Messungen zu zwei aufeinanderfolgenden Zeitpunkten während des Flugs des Luftfahrzeugs ausführt, um somit Messungen an zwei verschiedenen Messpunkten ausführen zu können, die den beiden verbleibenden Messpunkten entsprechen.

4. Verfahren nach Anspruch 3, **dadurch gekennzeichnet, dass** die LIDAR-Geräte (L1, L2, L3) jeweils auf einer ersten Luke vorne rechts, einer ersten Luke vorne links und einem Flügel des Luftfahrzeugs angeordnet sind.

5. Verfahren nach einem der Ansprüche 1 bis 4, **dadurch gekennzeichnet, dass** die vorherbestimmten Achsen von dem Luftfahrzeug abhängig sind.

6. Vorrichtung zum Messen der Luftturbulenz in der Umgebung eines Luftfahrzeugs, **dadurch gekennzeichnet, dass** sie Folgendes umfasst:

   - ein Messsystem (2), das LIDAR-Geräte (L1, L2, L3, L4) umfasst, die auf dem Luftfahrzeug montiert sind und dazu gedacht sind, beim Flug des Luftfahrzeugs zwölf Messungen der Luftleitgeschwindigkeit in der Außenumgebung des Luftfahrzeugs auszuführen, wobei das Messsystem (2) die zwölf Messungen jedes Mal an vier verschiedenen Messpunkten auf drei vorherbestimmten Achsen ausführt, wobei ein LIDAR-Gerät (L1, L2, L3, L4) an jedem Messpunkt drei Komponenten einer Luftleitgeschwindigkeit jeweils in den drei vorherbestimmten Achsen misst, indem es für jede Komponente eine Messung des Doppler-Effekts eines Laserstrahls ausführt, der emittiert wird und von Teilchen zurückgestreut wird, die in einem vorherbestimmten Volumen um den Messpunkt herum vorliegen; und
   - eine Zentraleinheit (3), die anhand der Messungen, die von dem Messsystem (2) ausgeführt werden, und eines vorherbestimmten mathematischen Modells erster Ordnung, das ein Feld von Luftleitgeschwindigkeiten als Funktion von zwölf Variablen beschreibt, ein Feld von Luftleitgeschwindigkeiten bestimmt, das in der Umgebung des Luftfahrzeugs vorliegt und das für die Luftturbulenz repräsentativ ist, wobei die zwölf Variablen die drei Komponenten des Windes jeweils auf den drei vorherbestimmten Achsen und die drei ersten Ableitungen des Windes jeweils auf jeder der drei vorherbestimmten Achsen sind, und wobei das mathematische Modell die Hypothese, nach der das Feld von Luftleitgeschwindigkeiten an den verschiedenen Messpunkten nicht einheitlich ist, und die Hypothese, nach der die ersten Ableitungen des Feldes von Luftleitgeschwindigkeiten nicht einheitlich sind, berücksichtigt.

7. Vorrichtung nach Anspruch 6, **dadurch gekennzeichnet, dass** die Zentraleinheit (3) auf dem Luftfahrzeug montiert ist und die Luftturbulenz während des Flugs des Luftfahrzeugs bestimmt.

8. Vorrichtung nach Anspruch 6, **dadurch gekennzeichnet, dass** sie zudem ein Aufzeichnungsmittel (10) umfasst, um in einer Datenbank (7) die von dem Messsystem (2) ausgeführten Messungen aufzuzeichnen, und dass die Zentraleinheit (3) die Luftturbulenz am Boden nach einem Flug anhand der Messungen, die in der Datenbank (7) während des Flugs aufgezeichnet wurden, bestimmt.

9. Vorrichtung nach einem der Ansprüche 6 bis 8, **dadurch gekennzeichnet, dass** das Messsystem (2) vier LIDAR-Geräte (L1, L2, L3, L4) umfasst, von denen jedes Messungen an einem der vier Messpunkte ausführt.

10. Vorrichtung nach einem der Ansprüche 6 bis 8, **dadurch gekennzeichnet, dass** das Messsystem (2) drei LIDAR-Geräte (L1, L2, L3) umfasst, dass zwei der LIDAR-Geräte jeweils Messungen an einem der Messpunkte ausführen, und dass das dritte LIDAR-Gerät Messungen zu zwei aufeinanderfolgenden Zeitpunkten während des Flugs des Luftfahrzeugs ausführt, um somit Messungen an zwei verschiedenen Messpunkten ausführen zu können, die mindestens den beiden verbleibenden Messpunkten entsprechen.

11. Vorrichtung nach Anspruch 10, **dadurch gekennzeichnet, dass** die LIDAR-Geräte (L1, L2, L3) jeweils auf einer ersten Luke vorne rechts, einer ersten Luke vorne links und einem Flügel des Luftfahrzeugs angeordnet sind.

12. Luftfahrzeug, **dadurch gekennzeichnet, dass** es eine Vorrichtung (1) umfasst, wie sie in einem der Ansprüche 6 bis 11 angegeben ist.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5648604 A
- US 6297878 B
- US 2003009268 A